**Europäisches Patentamt**

**European Patent Office**

**Office européen des brevets**

(19)

(11) Veröffentlichungsnummer: **0 054 836**
**B1**

(12) ## EUROPÄISCHE PATENTSCHRIFT

(45) Veröffentlichungstag der Patentschrift:
**27.08.86**

(51) Int. Cl.⁴: **G 01 B 5/00, G 01 B 5/06**

(21) Anmeldenummer: **81110263.1**

(22) Anmeldetag: **08.12.81**

(54) **Höhenmess- und Anreissgerät.**

(30) Priorität: **19.12.80 DE 3048045**

(43) Veröffentlichungstag der Anmeldung:
**30.06.82 Patentblatt 82/26**

(45) Bekanntmachung des Hinweises auf die Patenterteilung:
**27.08.86 Patentblatt 86/35**

(84) Benannte Vertragsstaaten:
**AT CH FR GB IT LI SE**

(56) Entgegenhaltungen:
**DE - A - 2 904 973**
**FR - A - 2 299 117**
**GB - A - 1 036 961**
**US - A - 3 044 740**
**US - A - 3 501 840**

(73) Patentinhaber: **MORA Fabrik für Messgeräte H. Freund,
Mühlstrasse 5-7, D-8750 Aschaffenburg (DE)**

(72) Erfinder: **Kern, Peter, Spessartstrasse 100,
D-8752 Goldbach (DE)**
Erfinder: **Stadler, Engelbert, Friedrich-Ebert-Strasse 31,
D-8751 Stockstadt/Main (DE)**
Erfinder: **Glaab, Heinrich, Lorenz-Heim-Strasse 15,
D-8752 Goldbach (DE)**

(74) Vertreter: **Dorner, Jörg, Dr.-Ing. et al, Dorner & Hufnagel
Patentanwälte Ortnitstrasse 20, D-8000 München 81 (DE)**

## Beschreibung

Die Erfindung bezieht sich auf ein Höhenmess- und Anreissgerät mit einer von einem Gerätefuss aufragenden Gerätesäule, an der vertikal ein Schieber geführt ist, welcher einen mit einem Mess- oder Anreisswerkzeug versehenen, in seiner Längsrichtung verfahrbaren Querarm trägt und mit einem von einem Gegenlager zu dem oberen Gerätesäulenende eine Kompensationskraft übertragenden, verstellbaren Kopplungselement.

Aus der US-Patentschrift 3 501 840 ist ein derartiges Höhenmess- und Anreissgerät bekannt. Das zuvor erwähnte Kopplungselement hat bei der bekannten Konstruktion die Gestalt einer Diagonalstrebe, welche von einem Verankerungspunkt am Gerätefuss bis zum oberen Gerätesäulenende reicht und dort längenverstellbar verankert ist, so dass die Gerätesäulenabbiegung unter den auf die Gerätesäule wirkenden Biegemomenten durch Justierung der wirksamen Länge des Kopplungselementes kompensiert werden kann. Eine Kompensation der Gerätesäulendurchbiegung in Abhängigkeit von der jeweils veränderlichen Querarmauskragung ist jedoch bei dem bekannten Gerät nicht möglich.

Aus der deutschen Offenlegungsschrift 2 904 973 ist es ferner bekannt, bei einer Werkzeugmaschine mittels eines Messfühlers die Stellung eines Supports, welcher ein Bearbeitungswerkzeug trägt, längs seines Weges auf einem Querarm der Maschine abzutasten und abhängig von der Supportstellung die wirksame Länge einer Diagonalstrebe zwischen dem oberen Ende einer etwa vertikalen Maschinensäule und einem Gerätefuss zur Kompensation der Maschinensäulenabbiegung einzustellen. Die Ableitung der für die Einstellung der Diagonalstrebe dienenden Messwerte ist bei dieser bekannten Konstruktion vergleichsweise kompliziert, wobei die auskragende Länge des Querarms der bekannten Werkzeugmaschine konstant ist und die bekannte Kompensationseinrichtung nicht auf solche Fälle anwendbar ist, bei denen der Querarm selbst in seiner Längsrichtung verschiebbar ist.

Durch die Erfindung soll die Aufgabe gelöst werden, ein Höhenmess- und Anreissgerät der eingangs beschriebenen Art in solcher Weise auszugestalten, dass sich die Stellgrösse entsprechend der Querarmauskragung in besonders einfacher Weise ableiten und unmittelbar dorthin übertragen lässt, wo ein Ende des Kopplungselementes zum Ausgleich der Gerätesäulenabbiegung zugänglich ist.

Diese Aufgabe wird erfindungsgemäss dadurch gelöst, dass das Kopplungselement abhängig von der Querarmauskragung im Sinne eines Ausgleichs der von ihr verursachten Gerätesäulenabbiegung mittels eines am oberen Gerätesäulenende angeordneten Getriebes verstellbar ist, das über eine zur Gerätesäule parallele Profilwelle und eine diese umgebende und sie antreibende Mitnehmermuffe antreibbar ist, die abhängig von der Querarmlängsverschiebung betätigt ist.

Das Getriebe kann ein Kombinationsgetriebe sein, dessen einer Eingang mit der Profilwelle verbunden ist und dessen anderer Eingang mit einer Stellgrösse entsprechend der Schieberhöheneinstellung beaufschlagbar ist.

Gemäss einer Ausführungsform kann das Kopplungselement zwischen dem oberen Gerätesäulenende und einem das Gegenlager bildenden, innerhalb der Gerätesäule frei aufragenden, ebenfalls am Gerätefuss verankerten Träger, insbesondere in Gestalt einer über ein Leitkulissenprofil geführten Rollenanordnung wirksam sein, welche abhängig von der Querarmauskragung und gegebenenfalls abhängig von der Schieberhöheneinstellung verschiebbar ist.

Bevorzugtermassen aber hat das Kopplungselement die Gestalt einer insbesondere diagonal verlaufenden Strebe, welche von dem oberen Gerätesäulenende, an dem sie drehbar gelagert ist, zu einer Gewindebohrung am Gerätefuss reicht, und welche abhängig von der Querarmverstellung und gegebenenfalls abhängig von der Schieberhöheneinstellung mittels des Getriebes verdrehbar ist und damit ihre wirksame Länge vergrössert oder verkleinert.

Das Getriebe kann eine Mikro-Stirnradgetriebeeinheit sowie einen Kettentrieb zur Kopplung der Mikro-Stirnradgetriebeeinheit mit der Strebe enthalten.

Nachfolgend werden Ausführungsbeispiele unter Bezugnahme auf die Zeichnung näher erläutert. Es stellen dar:

Fig. 1 eine teilweise im Schnitt gezeichnete Seitenansicht eines Höhenmess- oder Anreissgerätes im Bereich nahe des oberen Gerätesäulenendes mit dem auf der Gerätesäule geführten Schieber und einem Teil des Querarmes,

Fig. 2 Teile des Höhenmess- und Anreissgerätes gemäss Figur 1 im Bereich des Gerätefusses,

Fig. 3 einen Teil des Höhenmess- und Anreissgerätes nach Figur 1, teilweise im Schnitt gezeichnet und in Richtung der Querarmlängsachse gesehen,

Fig. 4 eine schematische, im Schnitt gezeichnete Ansicht des oberen Gerätesäulenendes einer anderen Ausführungsform und

Fig. 5 eine teilweise im Schnitt gezeichnete Ansicht des oberen Gerätesäulenendes einer nochmals anderen Ausführungsform.

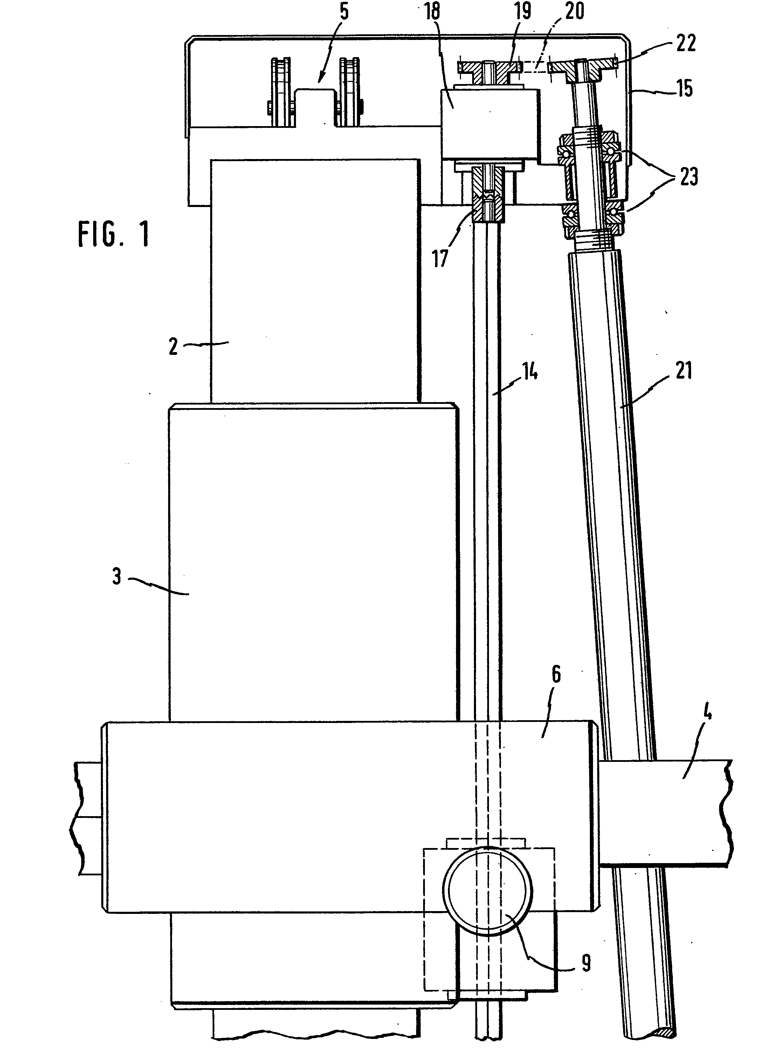

Das Höhenmess- und Anreissgerät nach den Figuren 1 bis 3 weist eine von einem Gerätefuss 1 aufragende Gerätesäule 2 auf, längs der in Vertikalrichtung ein Schieber 3 geführt ist. Der Schieber 3 trägt einen in Horizontalrichtung hin- und herverschiebbaren Querarm 4, an dessen einem Ende sich ein Messwerkzeug oder ein Anreisswerkzeug befindet, was jedoch in der Zeichnung nicht im einzelnen dargestellt ist.

Innerhalb der Gerätesäule 2 befindet sich ein auf das Gewicht des Schiebers und des Querarms abgestimmtes Gegengewicht, das mit dem Schieber über Ketten, Drahtseile, Stahlbänder oder dergleichen sowie eine am oberen Gerätesäulenende gelagerte Rollenanordnung 5 gekoppelt ist, um den Schieber mit dem daran angeordneten Querarm mit verhältnismässig geringen Kräften aufwärts und abwärts verschieben zu können.

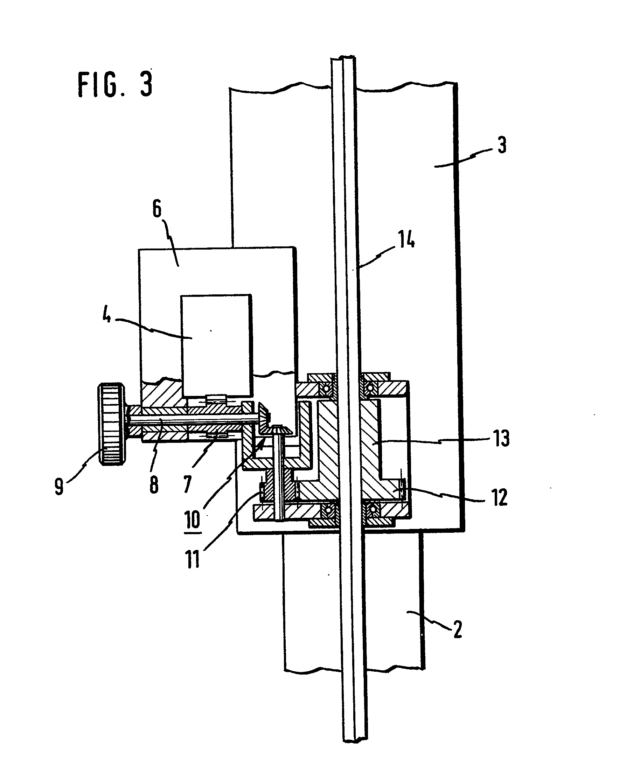

Aus Figur 3 ist zu ersehen, dass der Schieber 3 mit einem Gehäuse 6 verbunden ist, das einen dem Querschnitt des Querarmes 4 angepassten Kanal aufweist, durch den der Querarm 4 hindurchreicht. Der Querarm 4 trägt auf seiner Unterseite eine Zahnstange, die mit einem Ritzel 7 in Eingriff steht, das über eine Welle 8 und ein Handrad 9 verdreht werden kann, wodurch der Querarm 4 in seiner Längsrichtung hin- und hervergeschoben werden kann.

Die Welle 8 ist auf der von dem Handrad 9 abliegenden Seite des Ritzels 7 über dieses hinaus verlängert und treibt in der aus Figur 3 ersichtlichen Art und Weise ein Winkelgetriebe 10 an, das in geeigneter Weise innerhalb des Schiebers 3 bzw. des Gehäuses 6 untergebracht und gelagert ist. Die Ausgangswelle des Winkelgetriebes 10 trägt wiederum ein Ritzel 11, das in den Zahnkranz 12 einer Muffe 13 eingreift. Die Muffe 13 weist einen zentralen, profilierten Durchgangskanal auf, durch den sich eine Profilwelle 14 erstreckt. Die Profilwelle 14 verläuft parallel zur Gerätesäule 2 im Abstand von dieser von dem Gerätefuss 1 bis zu einem Kopfteil 15 am oberen Gerätesäulenende.

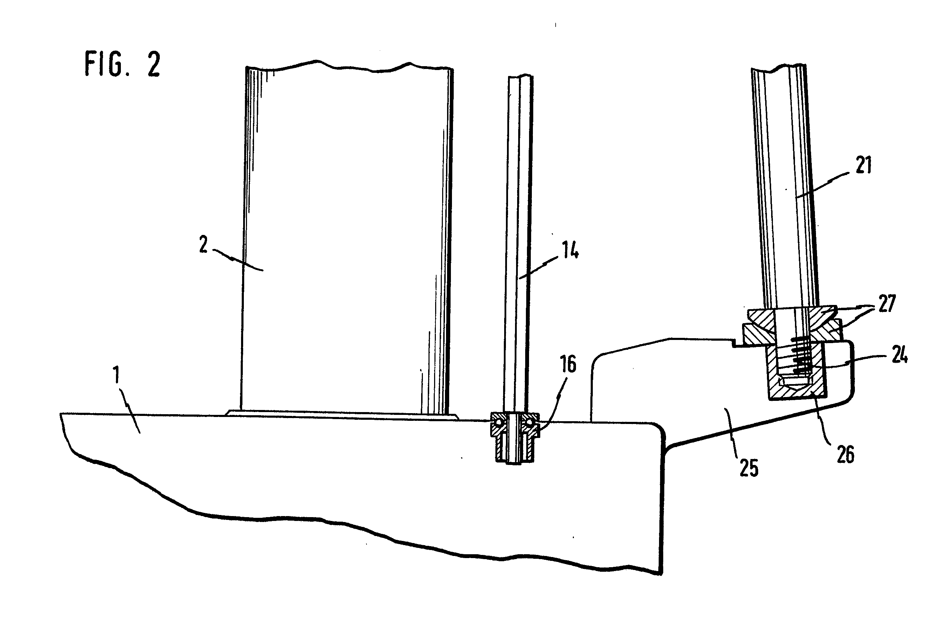

Während die Profilwelle 14 im Gerätefuss 1 in der aus Figur 2 ersichtlichen Weise durch ein einfaches Axial-Radiallager 16 gelagert ist, endet die Profilwelle 14 im Bereich des Kopfteiles 14 an einer Gelenkkupplung 17, welche die Profilwelle 14 mit einem Mikro-Stirnradgetriebe 18 verbindet, das innerhalb des Kopfteiles 15 montiert ist.

Die Verdrehung eines Ausgangs-Kettenrades 19 des Mikro-Stirnradgetriebes 18 entspricht aufgrund der dargestellten Kopplung mit dem Querarmantrieb der Auskragung des Querarms relativ zur Mittellängsachse der Gerätesäule 2. Die Verdrehung des Ausgangs-Kettenrades 19 wird über eine Kette 20 einem am oberen Ende einer Diagonalstrebe 21 befestigten Kettenrad 22 mitgeteilt.

Das obere Ende der Diagonalstrebe 21 ist über Axial-Radial-Kugellager 23 an dem Kopfteil 15 gelagert und damit bezüglich in Axialrichtung der Diagonalstrebe gerichteter Kräfte am oberen Gerätesäulenende verankert.

An ihrem unteren Ende ist die Diagonalstrebe 21 mit einem Feingewinde 24 versehen und in eine in einem Ansatz 25 verankerte Gewindebüchse 26 eingeschraubt. Elastische Dichtungsringe 27 schützen den Gewindeansatz und die Gewindebüchse vor dem Zutritt von Schmutz.

Wird also das Handrad 9 mit Bezug auf die Darstellung nach Figur 1 im Gegenuhrzeigersinn verdreht, um den Querarm 4 nach links über das Gehäuse 6 des Schiebers auskragen zu lassen, so würde hierdurch die Gerätesäule 2 an sich nach links abgebogen. Gleichzeitig aber wird die Verdrehung des Handrades 9 über die Profilwelle 14 zum oberen Gerätesäulenende hin übertragen, in dem Getriebe 18 stark untersetzt und als eine Verdrehung um einen bestimmten Winkel der Diagonalstütze 21 mitgeteilt, die sich stärker in die Gewindebüchse 26 einschraubt und sich dadurch wirkungsmässig verkürzt. Auf diese Weise wird einer Abbiegung der Gerätesäule 2 mit Bezug auf die Darstellung von Figur 1 nach links entgegengewirkt.

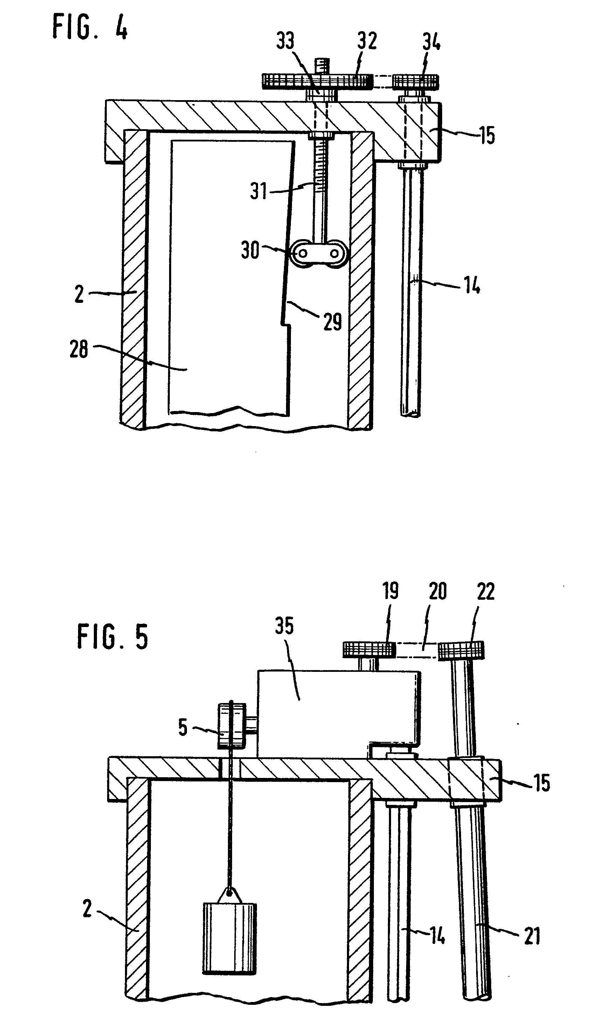

Während bei der Ausführungsform nach den Figuren 1 bis 3 das Gegenlager zur Aufnahme der durch das Koppelelement übertragenen Kompensationskräfte der Ansatz 25 des Gerätefusses 1 ist, gegen den das Kopfteil 15 vermittels der längenveränderlichen Diagonalstrebe 21 hingezogen wird, ist dieses Gegenlager bei der Ausführungsform nach Figur 4 in Gestalt eines Trägers 28 vorgesehen, welcher innerhalb der Gerätesäule 2 frei aufträgt und mit seinem unteren Ende ebenfalls an dem Gerätefuss 1 verankert ist. Der Träger 28 kann so schmal ausgeführt werden, dass er neben den innerhalb der Gerätesäule geführten Gegengewichten zu dem Schieber 3 in der Gerätesäule Platz findet. In seinem oberen Bereich ist der Träger 28 mit einer Kulissenfläche 29 versehen. Eine Rollenanordnung 30 stellt ein Kopplungselement zwischen dem Träger 28 und der Gerätesäule 2 dar und bewirkt bei Bewegung in Vertikalrichtung ein mehr oder weniger starkes Wegdrücken des oberen Gerätesäulenendes von dem oberen Ende des Trägers 28. Zu diesem Zwecke ist die Rollenanordnung 30 mit einer Gewindespindel 31 versehen, welche durch eine Bohrung des Kopfteiles 15 sowie durch eine mit einem Kettenrad 32 versehene Gewindebüchse 33 hindurchreicht. Das Kettenrad 32 ist über eine Antriebskette mit einem weiteren Kettenrad 34 kleineren Durchmessers verbunden, das auf der Profilwelle 14 befestigt ist. Im übrigen ist die Ausführungsform nach Figur 4 hinsichtlich der Kopplung der Profilwelle 14 mit dem Handrad 9 bzw. dem Querarmantrieb genauso ausgebildet wie die zuvor beschriebene Ausführungsform. Man erkennt, dass bei einer Verstellung des Querarmes 4 mit Bezug auf die Darstellung nach Figur 4 nach links die Gerätesäule 2 an sich mit ihrem oberen Ende aufgrund der wirksamen Biegemomente nach links abgebogen würde. Die Verstellbewegung des Handrades wird jedoch über die Profilwelle 14 derart auf die Rollenanordnung 30 übertragen, dass diese durch entsprechende Verdrehung der Gewindebüchse 33 an der Spindel 31 nach aufwärts gezogen wird, wodurch das obere Gerätesäulenende gegenüber dem Träger 28 nach rechts gedrängt wird und die Abbiegung aufgrund der Querarmauskragung kompensiert wird.

Figur 5 zeigt eine Ausführungsform, bei der anstelle des in Figur 1 gezeigten Getriebes 18 ein Summationsgetriebe 35 verwendet wird, dessen Eingängen einerseits die Verdrehung der Profilwelle 14 und andererseits eine Drehung entsprechend der Verstellung des Schiebers 3 in Vertikalrichtung mitgeteilt wird. Die letztgenannte Drehung kann beispielsweise von der Rollenanordnung 5 abgenommen werden, über die das den Schieber mit einem Gegengewicht verbindende Drahtseil gelegt ist. Das Ausgangs-Kettenrad 19 des Summationsgetriebes 35 bewirkt dann ähnlich wie bei der Ausführungsform nach Figur 1 eine entsprechende Verdrehung der Diagonalstütze 21. Hier jedoch wird die Verdrehung der Diagonalstütze 21 abhängig von der Querarmauskragung je nach Höheneinstellung des Schiebers 3 unterschiedlich gewählt. Je nach Abbiegungsverhalten der Gerätesäule 2 kann das Getriebe 35 auch ein Multiplikationsgetriebe sein.

**Patentansprüche**

1. Höhenmess- und Anreissgerät mit einer von einem Gerätefuss (1) aufragenden Gerätesäule (2), an der vertikal ein Schieber (3) geführt ist, welcher einen mit einem Mess- oder Anreisswerkzeug versehenen, in seiner Längsrichtung verfahrbaren Querarm (4) trägt, und mit einem von einem Gegenlager (25 bzw. 28) zu dem oberen Gerätesäulenende eine Kompensationskraft übertragenden, verstellbaren Kopplungselement (21 bzw. 30), dadurch gekennzeichnet, dass das Kopplungselement (21 bzw. 30) abhängig von der Querarmauskragung im Sinne eines Ausgleichs der von ihr verursachten Gerätesäulenabbiegung mittels eines am oberen Gerätesäulenende angeordneten Getriebes (18, 19, 20, 22 bzw. 32, 33, 34 bzw. 19, 20, 22, 35) verstellbar ist, das über eine zur Gerätesäule parallele Profilwelle (14) und eine diese umgebende und sie antreibende Mitnehmermuffe (13) antreibbar ist, die abhängig von der Querarmlängsverschiebung betätigt ist.

2. Gerät nach Anspruch 1, dadurch gekennzeichnet, dass das Getriebe ein Kombinationsgetriebe (35) ist, dessen einer Eingang mit der Profilwelle (14) verbunden ist und dessen anderer Eingang mit einer Stellgrösse entsprechend der Schieberhöheneinstellung beaufschlagbar ist.

3. Gerät nach Anspruch 1 oder 2, dadurch gekennzeichnet, dass das Kopplungselement (30) zwischen dem oberen Gerätesäulenende und einem das Gegenlager bildenden, innerhalb der Gerätesäule (2) frei aufragenden, ebenfalls am Gerätefuss (1) verankerten Träger (28), insbesondere in Gestalt einer über ein Leitkulissenprofil (29) geführten Rollenanordnung (30) wirksam ist, welche abhängig von der Querarmauskragung und gegebenenfalls abhängig von der Schieberhöheneinstellung verschiebbar ist.

4. Gerät nach Anspruch 1 oder 2, dadurch gekennzeichnet, dass das Kopplungselement (21) die Gestalt einer insbesondere diagonal verlaufenden Strebe (21) hat, welche von dem oberen Gerätesäulenende, an dem sie drehbar gelagert (23) ist, zu einer Gewindebohrung (26) am Gerätefuss (1, 25) reicht, und welche abhängig von der Querarmverstellung und gegebenenfalls abhängig von der Schieberhöheneinstellung mittels des Getriebes (18, 19, 20, 22) verdrehbar ist und damit ihre wirksame Länge vergrössert oder verkleinert.

5. Gerät nach Anspruch 4, dadurch gekennzeichnet, dass das Getriebe eine Mikro-Stirnradgetriebeeinheit (18) sowie einen Kettentrieb (19, 20, 22) zur Kopplung der Mikro-Stirnradgetriebeeinheit mit der Strebe (21) enthält.

**Claims**

1. A height measuring and scribing apparatus comprising a column (2), which rises from a base (1) and on which a slider (3) is vertically guided, which carries a transverse arm (4), which is provided with a measuring or scribing tool and is movable in its longitudinal direction, also comprising an adjustable coupling element (21 or 30), which transmits a compensating force from an abutment (25 or 28) to the top end of the column, characterized in that the coupling element (21) is adjustable by means of a transmission (18, 19, 20, 22 or 32, 33, 34 or 19, 20, 22, 35) in dependence on the overhang of the transverse arm in a sense to compensate the deflection of the column which is due to that overhang, and said transmission is adapted to be driven by means of a profiled shaft (14), which is parallel to the column, and by a coupling sleeve (13), which surrounds and drives said coupling shaft and which is operated in dependence on the longitudinal displacement of the transverse arm.

2. Apparatus according to claim 1, characterized in that the transmission is a combining transmission (35), one input member of which is connected to the profiled shaft (14) and the other input member of which is adapted to be actuated by a correcting variable corresponding to the height setting of the slider.

3. Apparatus according to claim 1 or 2, characterized in that the coupling element (30) is effective between the top end of the column (2) and a carrier (28), which constitutes the abutment and freely rises within the column (2) and is also anchored at the base (1) and which particularly consists of a roller array (30), which is guided on a cam (29) and which is displaceable in dependence on the overhang of the transverse arm and, if desired, in dependence on the height setting of the slider.

4. Apparatus according to claim 1 or 2, characterized in that the coupling member (21) consists of a particularly diagonally extending strut (21), which extends from and is rotatably mounted (23) at the top end of the column to a tapped bore (26) at the base (1, 25) and which is rotatable to increase or decrease its effective length by means of the transmission (18, 19, 20, 22) in dependence on the adjustment of the transverse arm and, if desired, in dependence on the height setting of the slider.

5. Apparatus according to claim 4, characterized in that the transmission comprises a micro spur gear unit (18) and a chain drive (19, 20, 22) for coupling the micro spur gear unit to the strut (21).

**Revendications**

1. Appareil à tracer et à mesurer les hauteurs, avec une colonne (2) supportée par un pied (1) et guidant verticalement un coulisseau (3) équipé d'un outil de mesure ou de traçage qui porte un bras transversal (4) pouvant se déplacer suivant sa direction longitudinale et avec un élément d'accouplement (21, 30) réglable pouvant transmettre une force de compensation depuis une butée (25, 28) à l'extrémité supérieure de la colonne, caractérisé en ce que l'élément d'accouplement (21, 30) peut être réglé en fonction du porte-à-faux du bras transversal sous forme d'une compensation de la flexion de la colonne provoquée par celui-ci au moyen d'une transmission disposée à l'extrémité supérieure de la colonne (18, 19, 20, 22, 32, 33, 34, 19, 20, 22, 35), qui peut être commandée par un arbre profilé (14) parallèle à la colonne et par un manchon d'entraînement (13) entourant cet arbre et l'entraînement, ce manchon pouvant être commandé en fonction du déplacement longitudinal du bras transversal.

2. Appareil selon la revendication 1, caractérisé en ce que la transmission est une transmission combinée (35) dont une entrée est reliée à l'arbre profilé (14) et dont l'autre entrée peut recevoir une grandeur de réglage, en fonction du réglage en hauteur du coulisseau.

3. Appareil selon la revendication 1 ou 2, caractérisé en ce que l'élément d'accouplement (30) fonctionne entre l'extrémité supérieure de la colonne et un support (28) ancré également au pied de l'appareil (1), constituant la butée et dressé librement à l'intérieur de la colonne (2) constitué, en particulier, par un dispositif à galets (30) guidé sur une coulisse profilée de guidage (29), ce dispositif étant ajustable en fonction du porte-à-faux du bras transversal et, éventuellement, en fonction du réglage en hauteur du coulisseau.

4. Appareil selon la revendication 1 ou 2, caractérisé en ce que l'élément d'accouplement (21) présente la disposition d'une contre-fiche (21) disposée diagonalement entre l'extrémité supérieure de la colonne, où elle est supportée, avec possibilité de rotation (23) et un alésage fileté (26) dans le pied de l'appareil (1, 25) et qui peut être mise en rotation au moyen de la transmission (18, 19, 20, 22) en fonction du déplacement du bras transversal et, éventuellement, en fonction du réglage en hauteur du coulisseau, de manière à ce que sa longueur utile soit augmentée ou diminuée.

5. Appareil selon la revendication 4, caractérisé en ce que la transmission contient une boîte de transmission (18) miniaturisée à engrenage droit ainsi qu'une commande par chaîne (19, 20, 22) pour accoupler la transmission miniaturisée à engrenages droits avec la contre-fiche (21).

FIG. 1

0 054 836

FIG. 2

2

14

1

16

25

21

27

24

26

0 054 836

FIG. 3

# FIG. 4

# FIG. 5